# EUROPÄISCHE PATENTSCHRIFT

(11) **EP 3 577 072 B1**
(45) Veröffentlichungstag und Bekanntmachung des Hinweises auf die Patenterteilung: **24.11.2021**
(21) Anmeldenummer: 18701369.3
(22) Anmeldetag: 30.01.2018
(51) Int. Cl.: C01B 33/40, C01B 33/44, C04B 14/20, C09K 21/02, C09D 7/61, C08K 3/34

(54) **SCHICHTSILICATLAMELLEN MIT HOHEM ASPEKTVERHÄLTNIS**
HIGH ASPECT RATIO SHEET SILICATE LAMELLA
LAMELLES EN SILICATE STRATIFORME AYANT UN RAPPORT D'ASPECT ÉLEVÉ

(30) Priorität: 01.02.2017 EP 17154175
(43) Veröffentlichungstag der Anmeldung: 11.12.2019
(73) Patentinhaber: BYK-Chemie GmbH, 46483 Wesel (DE)
(72) Erfinder: KALO, Hussein, 46483 Wesel (DE); BREU, Josef, 95448 Bayreuth (DE); STOETER, Matthias, 90480 Nürnberg (DE); DAAB, Matthias, 69181 Leimen (DE)
(74) Vertreter: Altana IP Department
(86) Internationale Anmeldenummer: PCT/EP2018/052255
(87) Internationale Veröffentlichungsnummer: WO 2018/153621

(56) Entgegenhaltungen:
- EP-A1- 0 299 351
- EP-A2- 0 282 928
- WO-A1-2011/089089
- WO-A2-2012/175431

## Beschreibung

Die vorliegende Erfindung betrifft Schichtsilicatlamellen eines 2:1-Schichtsilicats mit einem hohen Aspektverhältnis, ein Verfahren zur Herstellung dieser Schichtsilicatlamellen sowie eine wässrige Dispersion, welche diese Schichtsilicatlamellen enthält. Ferner betrifft die vorliegende Erfindung die Verwendung der erfindungsgemäßen Schichtsilicatlamellen zur Herstellung eines Verbundmaterials sowie ein entsprechendes Verbundmaterial umfassend oder erhältlich unter Verwendung der Schichtsilicatlamellen, insbesondere zur Verwendung als Diffusionsbarriere oder als Flammschutzmittel.

### Stand der Technik

Es ist aus dem Stand der Technik bekannt, dass zur Herstellung von Verbundmaterialien diesen Verbundmaterialen Schichtsilicate zugesetzt werden, um hierdurch die mechanischen Eigenschaften des resultierenden Verbundmaterials zu verbessern. Ferner gelingt es auf diese Weise gerade die Barriereeigenschaften eines Verbundsystems zu verbessern.

Es hat sich gezeigt, dass der Grad der Verbesserung der Eigenschaften maßgeblich vom Aspektverhältnis der verwendeten Schichtsilicate abhängt. Unter dem Begriff des Aspektverhältnisses wird ganz allgemein der Quotient des mittleren Durchmessers eines Plättchens und der Plättchenhöhe verstanden. Es muss hierbei prinzipiell zwischen dem Aspektverhältnis einer einzelnen Lamelle und dem durchschnittlichen Aspektverhältnis einer exfolierten bzw. delaminierten Probe eines 2:1-Schichtsilicats unterschieden werden. Das Aspektverhältnis einer einzelnen Lamelle kann mittels Rasterkraftmikroskopie (atomic force microscopy, AFM) bestimmt werden. Da entsprechend bestimmte Werte für das Aspektverhältnis jedoch nicht repräsentativ für die gesamte Probe eines exfolierten bzw. delaminierten 2:1-Schichtsilicats sind, wird im Sinne dieser Erfindung auf das sogenannte durchschnittliche Aspektverhältnis des exfolierten bzw. delaminierten 2:1-Schichtsiilicats zurückgegriffen. Das durchschnittliche Aspektverhältnis des exfolierten bzw. delaminierten 2:1-Schichtsilicats wird mittels Static Light Scattering (SLS) bestimmt.

Es gilt grundsätzlich, dass je höher das Aspektverhältnis desto besser sind beispielsweise die Barriereeigenschaften des Verbundmaterials, welches das Schichtsilicat enthält.

Im Regelfall weisen Schichtsilicate Stapel von Silicatlamellen auf, sogenannte Taktoide mit Höhen von mehreren Nanometern bis hin zu einigen Millimetern. Die Plättchendurchmesser betragen bei Schichtsilicaten abhängig von ihrer Zusammensetzung und Entstehung wenige Nanometer bis zu einigen Zentimetern.

Es ist bekannt, dass durch chemische und/oder physikalische Behandlung von Schichtsilicaten das Aspektverhältnis in gewissen Bereichen erhöht werden kann, indem die Taktoide entlang ihrer Stapelachse aufgespalten werden. Dieser Prozess ist in der Literatur als Exfolierung bekannt. Dies kann beispielsweise erreicht werden, indem quellfähige Schichtsilicate in ein polares Lösemittel eingebracht werden.

Eine Grundvoraussetzung zur Herstellung von Schichtsilicaten mit extremen Aspektverhältnissen ist, dass diese eine relativ große laterale Ausdehnung der Plättchen bzw. Taktoide aufweisen. Die laterale Ausdehnung steigt prinzipiell mit der Schichtladung an. Mit zunehmender Schichtladung der Schichtsilicate tritt allerdings die Problematik auf, dass diese Schichtsilicate nicht mehr exfolieren, wenn sie in ein polares Lösemittel eingebracht werden. Es ist in der Literatur allgemein bekannt, dass Schichtsilicate in Wasser nur bis zu einer Schichtladung von ≤ 0,55 p.f.u. (englisch: per formula unit, im deutschen pro Formeleinheit) exfolieren (vgl. K. Jasmund, G. Lagaly, Tonminerale und Tone, Struktur, Eigenschaften, Anwendungen und Einsatz in Industrie und Umwelt, Steinkopff, Darmstadt 1993).

Aufgrund dieser Limitierung und dem Wunsch Schichtsilicate mit extremen Aspektverhältnissen herzustellen, existieren im Stand der Technik einige Verfahren, mit denen versucht wurde, auch Schichtsilicate mit entsprechend hohen Schichtladungen zu exfolieren oder sogar zu delaminieren, d.h. die Aufspaltung in einzelne Lamellen herbeizuführen.

So beschreiben beispielsweise die Patentschriften US4,608,303, US3,325,340 sowie in der EP 0282928B und EP 0299351 A1 ein Verfahren zur Herstellung von wässrigen Dispersionen, die exfolierte 2:1-Schichtsilicate enthalten. In diesen Schriften wird keine Unterscheidung zwischen den Begriffen Exfolierung und Delaminierung getroffen, so dass diese Begriffe dort fälschlicherweise synonym verwendet werden. Aufgrund des Offenbarungsgehalts der Schriften, ist davon auszugehen, dass dort lediglich eine Exfolierung stattfindet. Allen Verfahren dieser Schriften ist gemeinsam, dass die eingesetzten 2:1-Schichtsilicate einer oder mehreren lonenaustauschreaktionen mit Kationen unterzogen werden, die eine hohe Hydratationsenthalpie aufweisen und somit zu einer Quellung der kationischen Schichten führen. Auch wenn in diesen Schriften entsprechende Austauschreaktionen und Quellungsschritte durchgeführt wurden, exfoliert das Material nicht in Wasser, sondern es erfordert immer noch das zusätzliche Einwirken von äußeren Scherkräften, um zumindest eine partielle Exfolierung zu bewirken. Auch wenn mit den dort beschriebenen Verfahren eine Exfolierung herbeigeführt werden kann, wirkt sich das zwingende Einwirken von äußeren Scherkräften auf das gequollene 2:1-Schichtsilicat negativ aus, so dass dadurch beispielsweise das Brechen von Taktoiden initiiert werden kann. Demnach sind diese Verfahren nicht geeignet, Materialien mit extremen Aspektverhältnissen herzustellen.

Die WO 2011/089089 A1 soll dagegen ein Verfahren zur Herstellung von Schichtsilicat-Plättchen mit einem hohen Aspektverhältnis beschreiben. Das Verfahren umfasst A) die Herstellung eines synthetischen Smectits der Formel [M_{n/Valenz}]^{inter}[M^{I}ₘM^{II}ₒ]^{oct}[M^{III}₄]^{tet}X₁₀Y₂ mit einer Schichtladung von zwischen 0,8 und 1,0 sowie B) die Exfolierung bzw. Delaminierung des synthetischen Smectits aus Schritt A) zu Schichtsilicat-Plättchen. Wie auf Seite 8 dieser Schrift beschrieben, wird Schritt B) durchgeführt, indem der synthetische Smectit in ein polares Lösemittel, bevorzugt in Wasser, eingebracht wird. Durch das Einbringen in ein polares Lösemittel soll es zur osmotischen Quellung des Smectits kommen, welche eine Exfolierung bzw. Delaminierung bewirkt. Trotz der sehr hohen Schichtladung soll angeblich eine chemische bzw. physikalische Behandlung zur Exfolierung nicht notwendig sein (vgl. S. 8, Z. 14/15), womit die Lehre dieser Patentschrift konträr zur allgemein anerkannten Aussage ist, dass 2:1-Schichtsilicate mit einer theoretisch berechneten Schichtladung von > 0,55 p.f.u. nicht exfolieren, wenn diese in ein polares Lösemittel eingebracht werden. Das einzige Beispiel beschreibt ein Verfahren mit Lithium Hectorit.

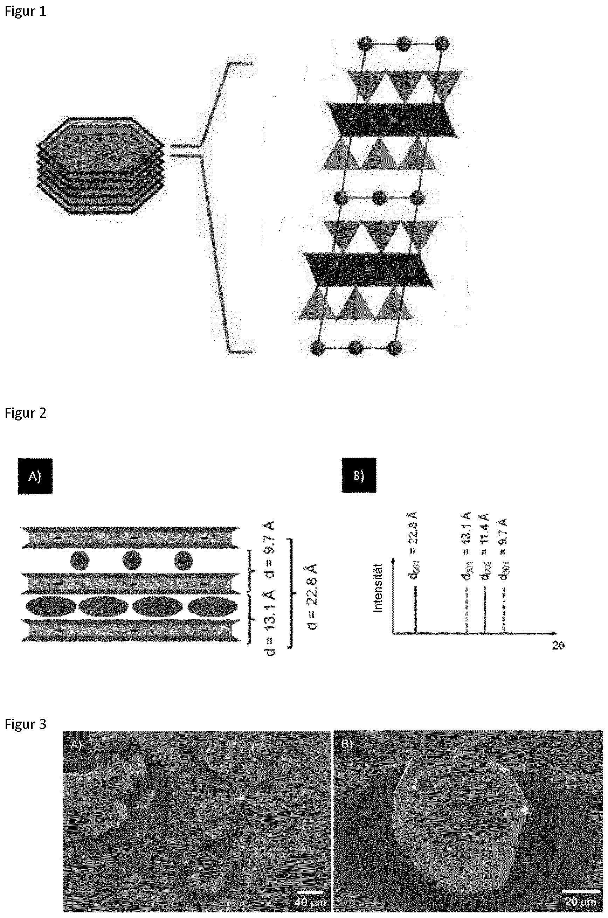

In einem Artikel von Breu et. al. in Langmuir 2017 (33), Seiten 4816-4822 wird die Delaminierung von Hectoriten behandelt. Aus Figur 3 dieser Veröffentlichung lässt sich entnehmen, das Natrium Hectorit mit einer Schichtladung nach Lagaly von 0.6 nicht delaminiert.

Es kann daher davon ausgegangen werden, dass mit dem in der WO 2011/089089 A1 beschriebenen Verfahren zumindest keine Delaminierung von Natrium-Schichtsilicaten in Lamellen erzielt werden kann.

WO 2012/175421 A2 beschreibt die Herstellung von beschichteten Kunststofffolien basierend auf Mischungen enthaltend strahlenhärtbare Polymerzusammensetzungen und Schichtsilikate. Die Schichtsilikate entsprechen den aus WO 2011/089089 A1 bekannten Schichtsilikaten.

Der Stand der Technik beschreibt somit lediglich Verfahren mit denen 2:1-Schichtsilicate in Taktoide aufgespalten werden können. Durch die Exfolierung ist es möglich das Aspektverhältnis dieser Taktoide zu erhöhen. Da allerdings zur Exfolierung das Einwirken von äußeren Scherkräften erforderlich ist, wird das Aspektverhältnis durch Brechen der Taktoide wiederum negativ beeinflusst. Insbesondere sind aus dem Stand der Technik keine Schichtsilicatlamellen mit extremen Aspektverhältnissen und einer theoretisch berechneten Schichtladung von mehr als 0,55 p.f.u. bekannt. Der Begriff Schichtsilicatlamelle bezeichnet im Rahmen dieser Erfindung ein Einzelplättchen in Abgrenzung zur Stapelung von mehreren Plättchen, welche als Taktoide bezeichnet werden.

### Aufgabe

Vor dem Hintergrund des Standes der Technik besteht somit weiterhin das Bedürfnis Schichtsilicatlamellen mit einem extrem hohen Aspektverhältnis bereitstellen zu können. Diese Schichtsilicatlamellen sollen insbesondere geeignet sein in ein Verbundmaterial eingearbeitet werden zu können, um unter anderem die Barriere- und Flammschutzeigenschaften dieses Verbundmaterials zu verbessern.

### Lösung der Aufgabe

Die vorstehend beschriebenen Aufgaben werden gelöst durch die in den Patentansprüchen bezeichneten Gegenstände sowie den in der nachfolgenden Beschreibung offenbarten bevorzugten Ausführungsformen dieser Gegenstände.

Ein erster Gegenstand der vorliegenden Erfindung sind daher Schichtsilicatlamellen erhältlich durch die Delaminierung eines eine geordnete Wechsellagerung aufweisenden 2:1-Schichtsilicats in Wasser umfassend wenigstens die Schritte
(i) Herstellung des eine geordnete Wechsellagerung aufweisenden 2:1-Schichtsilicats durch Behandlung eines 2:1-Schichtsilicats (A), mit einem Lösemittelgemisch aus Wasser und einem Monoalkohol mit 1 bis 4 Kohlenstoffatomen, welches ein Alkylammoniumsalz enthält, wobei das 2:1-Schichtsilicat (A) eine Schichtladung nach Lagaly von 0,56 p.f.u. bis 0,90 p.f.u. aufweist und die Zwischenschichten mindestens alternierend Natriumkationen aufweisen,
(ii) Separieren des eine geordnete Wechsellagerung aufweisenden 2:1-Schichtsilicats von dem Lösemittelgemisch des Alkylammoniumsalzes,
(iii) Delaminierung des eine geordnete Wechsellagerung aufweisenden 2:1-Schichtsilicats durch Einbringen des unter (ii) separierten eine geordnete Wechsellagerung aufweisenden 2:1-Schichtsilicats in Wasser zur Herstellung einer wässrigen Dispersion enthaltend Schichtsilicatlamellen,
(iv) Separieren der Schichtsilicatlamellen von der unter (iii) hergestellten Dispersion,
dadurch gekennzeichnet, dass
die Schichtsilicatlamellen ein durchschnittliches Aspektverhältnis von mindestens 10.000 aufweisen.

Ein weiterer Gegenstand der vorliegenden Erfindung sind Schichtsilicatlamellen eines 2:1-Schichtsilicats mit einem durchschnittlichen Aspektverhältnis von mindestens 10.000 bis 50.000 und einer Schichtladung nach Lagaly von 0,56 p.f.u. bis 0,90 p.f.u.

Die neuen Schichtsilicatlamellen erhältlich durch die Delaminierung eines eine geordnete Wechsellagerung aufweisenden 2:1-Schichtsilicats in Wasser und die Schichtsilicatlamellen eines 2:1-Schichtsilicats mit einem durchschnittlichen Aspektverhältnis von mindestens 10.000 bis 50.000 und einer theoretischen Schichtladung von 0,56 p.f.u. bis 0,90 p.f.u. werden auch als erfindungsgemäße Schichtsilicatlamellen bezeichnet.

Das die geordnete Wechsellagerung aufweisende 2:1-Schichtsilicat wird im Rahmen der vorliegenden Erfindung auch als 2:1-Schichtsilicat (WL) bezeichnet.

Ebenfalls Gegenstand der vorliegenden Erfindung ist ein Verfahren zur Herstellung der erfindungsgemäßen Schichtsilicatlamellen durch die Delaminierung eines eine geordnete Wechsellagerung aufweisenden 2:1-Schichtsilicats in Wasser umfassend wenigstens die Schritte
(i) Herstellung des eine geordnete Wechsellagerung aufweisenden 2:1-Schichtsilicats durch Behandlung eines 2:1-Schichtsilicats (A), mit einem Lösemittelgemisch aus Wasser und einem Monoalkohol mit 1 bis 4 Kohlenstoffatomen, welches ein Alkylammoniumsalz enthält, wobei das 2:1-Schichtsilicat (A) eine Schichtladung nach Lagaly von 0,56 p.f.u. bis 0,90 p.f.u. aufweist und die Zwischenschichten mindestens alternierend Natriumkationen einer Art aufweisen,
(ii) Separieren des eine geordnete Wechsellagerung aufweisenden 2:1-Schichtsilicats von dem Lösemittelgemisch des Alkylammoniumsalzes,
(iii) Delaminierung des eine geordnete Wechsellagerung aufweisenden 2:1-Schichtsilicats durch Einbringen des unter (ii) separierten eine geordnete Wechsellagerung aufweisenden 2:1-Schichtsilicats in Wasser zur Herstellung einer wässrigen Dispersion enthaltend Schichtsilicatlamellen,
(iv) Separieren der Schichtsilicatlamellen von der unter (iii) hergestellten Dispersion.

Ein weiterer Gegenstand der vorliegenden Erfindung ist eine wässrige Dispersion, welche die erfindungsgemäßen Schichtsilicatlamellen enthält. Ferner ist die Verwendung der erfindungsgemäßen Schichtsilicatlamellen zur Herstellung eines Verbundmaterials Gegenstand der vorliegenden Erfindung. Auch sind von der vorliegenden Erfindung entsprechende Verbundmaterialien enthaltend die erfindungsgemäßen Schichtsilicatlamellen umfasst sowie diese Verbundmaterialien zur Verwendung als Diffusionsbarriere oder als Flammschutzmittel.

### Ausführliche Beschreibung

Zunächst seien einige im Rahmen der vorliegenden Erfindung verwendeten Begriffe erläutert.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen.

Der Begriff eines Schichtsilicats ist dem Fachmann geläufig. Schichtsilicate, auch bekannt als Phyllosilicate oder Blattsilicate, sind plättchenartige Minerale, die sich durch ihren schichtartigen Aufbau auszeichnen. Diese weisen eine Vielzahl polyanionischer Lamellen auf, welche aus Tetraederschichten T und Oktaederschichten O aufgebaut sind. Je nach Aufbau der polyanionischen Lamellen unterscheidet man ganz allgemein 1:1-Schichtsilicate und 2:1-Schichtsilicate. Die polyanionischen Lamellen eines 1:1-Schichtsilicats setzen sich zusammen aus einer Tetraederschicht und einer Oktaederschicht, wohingegen die polyanionischen Schichten eines 2:1-Schichtsilicats gebildet werden aus zwei Tetraederschichten und einer Oktaederschicht, wobei die beiden Tetraederschichten die Oktaederschicht in ihrer Mitte einschließen. Ein entsprechender Aufbau eines 2:1-Schichtsilicats ist in Figur 1 dargestellt.

Der Begriff der Lamelle eines 2:1-Schichtsilicats bezeichnet im Rahmen der vorliegenden Erfindung somit genau eine polyanionische Schicht bestehend aus der Abfolge einer Tetraederschicht, einer Oktaederschicht und einer Tetraederschicht, wobei diese wie nachfolgend beschrieben aufgebaut und miteinander verknüpft sind. Im Aufbau eines Schichtsilicats sind zwei Lamellen über eine sogenannte Zwischenschicht miteinander verbunden, in welche unterschiedliche Kationen zum Ladungsausgleich eingelagert sind.

Auf der linken Seite von Figur 1 ist ein Stapel mehrerer Lamellen abgebildet. Schichtsilicate sind in der Regel ohne feste Phasenbeziehung zueinander gestapelt. Aufgrund des Fehlens der Translationssymmetrie in der dritten Dimension können entsprechende Stapel nicht als Kristall bezeichnet werden, sondern es hat sich der Begriff Taktoid etabliert. Dieser wird in der vorliegenden Erfindung entsprechend verwendet.

Die Tetraederschichten der Schichtsilicate bestehen aus SiO₄⁴⁻- und AlO₄⁵⁻-Einheiten, welche über die basalen Sauerstoffatome dreifach eckenverknüpft sind. Jedes basale O²⁻ verbindet ein _{S}i⁴⁺-Si⁴⁺- oder ein Si⁴⁺-Al³⁺-Kationenpaar. Die Oktaederschichten weisen üblicherweise als Kationen Mg²⁺ und/oder Al³⁺ auf, wobei allerdings auch eine Substitution dieser Kationen mit Ni²⁺, Cr³⁺, Fe²⁺, Fe³⁺, Cu²⁺, Zn²⁺, Ti⁴⁺, V³⁺, Li⁺, Co²⁺ und Mn²⁺ möglich ist. In der Oktaederschicht sind dieser Kationen vier gemeinsamen Sauerstoffatomen und zwei zusätzlichen Hydroxylgruppen und/oder Fluoridatomen koordiniert sind. Die Tetraederschichten sind mit der Oktaederschicht über eine gemeinsame Anionenebene verbunden.

2:1-Schichtsilicate sind meist soweit kristallin, so dass eine Strukturaufklärung mit atomarer Auflösung üblicherweise mittels gängiger Diffraktionsmethoden möglich ist. Dabei wird üblicherweise auf Einkristallröntgendiffraktion oder Pulverdiffraktion zurückgegriffen.

Das Anionengerüst pro Formeleinheit eines 2:1-Schichtsilicats ist zusammengesetzt aus O₁₀X₂ (mit X gleich OH⁻ oder F⁻), so dass dieses Anionengerüst insgesamt 22 negative Ladungen pro Formeleinheit vorgibt. Diese negativen Ladungen werden jedoch nur teilweise durch die Kationen des Oktaeders und der beiden Tetraeder kompensiert. Der Differenzbetrag der Ladung pro Formeleinheit (abgekürzt bezeichnet als p.f.u.) wird als Schichtladung bezeichnet. Die Ladungsneutralität eines 2:1-Schichtsilicats wird durch sogenannte Zwischenschichtkationen gewährleistet, die zwischen zwei polyanionischen Lamellen eingelagert sind.

Bei bekannter Verteilung der Kationen im 2:1-Schichtsilicat, wie sie beispielsweise mittels Röntgendiffraktion ermittelt werden kann, kann unter Zugrundelegung der Ladung des Anionengerüsts die Schichtladung berechnet werden. Dabei wird die Summe der positiven Ladungen der Kationen auf den Oktaederplätzen und den Tetraederplätzen pro Formeleinheit von den 22 negativen Ladungen des Anionengerüsts subtrahiert. So ergibt sich beispielsweise für das 2:1-Schichtsilicat mit der Zusammensetzung Na_{0,65}[Mg_{2,4}Li_{0,55}□]Si₄O₁₀F₂ für die Kationen aus dem Oktaeder und den beiden Tetraedern eine positive Ladung von 21,35. Aus der Differenz der 22 negativen Ladungen und den 21,35 positiven Ladungen ergibt sich eine theoretische Schichtladung von 0,65.

Aufgrund der Tatsache, dass das Anionengerüst von 2:1-Schichtsilicaten und deren Ladung vorgegeben ist, wird die Schichtladung von der Art der Kationen in den Oktaedern und Tetraedern bestimmt. Zur Erhöhung der Schichtladung eines 2:1-Schichtsilicats ist es daher die Verwendung von niedrig geladenen Kationen in der Synthese der 2:1-Schichtsilicate bevorzugt.

Die Verteilungsdichte und die Art dieser Zwischenschichtkationen, die vor allem den Schichtabstand zwischen zwei Lamellen eines 2:1-Schichtsilicats bestimmt, hat wesentlichen Einfluss auf die interlamellare Wechselwirkung. Es ist dem Fachmann bekannt, dass Zwischenschichtkationen eines 2:1-Schichtsilicats in einer Austauschreaktion durch andere Kationen ersetzt werden können. Diese Austauschbarkeit der Kationen in den Zwischenschichten ermöglicht die Herstellung von 2:1-Schichtsilicaten, die eine geordnete Wechsellagerung aufweisen.

Die atomare Zusammensetzung eines 2:1-Schichtsilicats und die damit einhergehende Schichtladung sind für die makroskopischen Eigenschaften eines 2:1-Schichtsilicats bzw. deren Lamellen verantwortlich. In diesem Zusammengang ist das sogenannte durchschnittliche Aspektverhältnis von besonderer Relevanz, welches definiert ist als der Quotient des mittleren Durchmessers und der Höhe eines Taktoids bzw. einer Lamelle. Da im Rahmen der vorliegenden Erfindung eine Unterscheidung zwischen einem Taktoid und einer Lamelle getroffen wird, muss auch eine Unterscheidung zwischen dem Aspektverhältnis eines Taktoids und einer Lamelle getroffen werden. Wenn im Rahmen der vorliegenden Erfindung von dem durchschnittlichen Aspektverhältnis die Rede ist, so ist damit das durchschnittliche Aspektverhältnis in Bezug auf die erfindungsgemäßen Schichtsilicatlamellen gemeint.

Das durchschnittliche Aspektverhältnis eines exfolierten bzw. delaminierten 2:1-Schichtsilicats wird mittels Static Light Scattering (SLS) gemäß DIN 13320 (Stand: 2009) bestimmt.

Es ist möglich das Aspektverhältnis durch diverse Arbeitsschritte zu erhöhen oder zu verringern. Prinzipiell verringert sich das Aspektverhältnis durch Anlagerung mehrerer Primärtaktoide zu einem Pseudotaktoid oder durch Brechen eines Taktoids bzw. einer Lamelle. Im Gegensatz dazu verbessert sich das Aspektverhältnis durch Exfolierung oder durch Delaminierung eines Taktoids. In der Literatur werden die Begriffe der Exfolierung bzw. der Delaminierung fälschlicherweise teilweise synonym verwendet. In ihrer korrekten Verwendung bedeutet der Begriff der Exfolierung die Spaltung eines Taktoids in dünnere Taktoide. Der Begriff der Delaminierung beschreibt dagegen die Spaltung eines Taktoids in die einzelnen Lamellen. Im Rahmen dieser Erfindung wird zwischen den beiden Begriffen Exfolierung und Delaminierung unterschieden und es gelten die vorstehend genannten Definitionen.

Der Begriff der geordneten Wechsellagerung ist aus der Fachliteratur (vgl. Stöter et al. Chem. Mater. 2014, 26, 5412-5419.) bekannt und beschreibt das Auftreten einer statistisch alternierenden Kationenbesetzung der Zwischenschichträume eines 2:1-Schichtsilicats. In anderen Worten bedeutet dies, dass im statistischen Mittel jede zweite Zwischenschicht die gleiche Art von Zwischenschichtkationen aufweist, wobei es bevorzugt ist, dass die jeweilige Zwischenschicht lediglich eine Art eines Kations aufweist. Beispielhaft und vereinfacht gesprochen bedeutet dies, dass eine erste Zwischenschicht lediglich Natriumkationen aufweist. In der nächsten Zwischenschicht ist dann wiederum eine andere Art eines Kations, wie beispielsweise ein n-Butylammoniumkation, enthalten. Die nächste Zwischenschicht ist dann wieder identisch zur ersten Zwischenschicht und die vierte Zwischenschicht identisch zur zweiten. Bei der vorstehenden Betrachtung handelt es sich um eine vereinfachte Betrachtungsweise zur Veranschaulichung. Da es sich bei 2:1-Schichtsilicaten um sehr komplex aufgebaute Materialien handelt, können Defekte auftreten, so dass auch von einer geordneten Wechsellagerung gesprochen wird, wenn ein entsprechender Aufbau im statistischen Mittel vorliegt. Das Vorliegen der wechselgelagerten Phase wird im Pulverdiffraktogramm durch Auftreten eines Überstrukturreflexes sichtbar. Dieser weist einen d-Wert auf, der den summierten Schichtabständen der vollständig ausgetauschten Phasen entspricht. Zur Erläuterung wird auf Figur 2 verwiesen, in der dies schematisch wiedergegeben ist. Die Güte der Alternation beider Schichten wird durch den aus der *00I-*Serie gemittelten Schichtabstand der Überstruktur und dessen Variationskoeffizienten bestimmt. Liegt dieser unterhalb von 0,75% kann von einer geordneten Wechsellagerung gesprochen werden, die *00I*-Serie wird dann als rational bezeichnet und folgt dem Bragg'schen Gesetz (vgl. S. W. Bailey, Amer. Mineral. 1982, 67, 394-398).

Es ist dem Fachmann bekannt, dass das Quellverhalten eines 2:1-Schichtsilicats von der Art des Zwischenschichtkations und seiner Hydratationsenthalpie, sowie von der Schichtladung, der Temperatur, dem Druck und dem Elektrolythintergrund abhängt. Aufgrund der kompetitiven attraktiven (z.B. Coulomb-Anziehung zwischen Lamelle und Zwischenschichtkationen, van-der-Waals-Kräfte) und repulsiven Kräfte (z.B. Coulomb-Abstoßung der Lamellen untereinander) zwischen Silicatlamellen können unterschiedliche Quellverhalten auftreten, die sich prinzipiell in zwei Bereiche unterteilen lassen.

Im ersten Bereich findet die Aufnahme einer definierten Anzahl an Wasserlagen im Zwischenschichtraum statt, die auch als kristalline Quellung durch stufenweise Hydratation bezeichnet wird. Üblicherweise sind 2:1-Schichtsilicate in der Lage Strukturen mit einer Wasserlage und mit zwei Wasserlagen auszubilden. Enthält das 2:1-Schichtsilicat Zwischenschichtkationen mit einer hohen Hydratationsenthalpie, wie beispielsweise Li+ oder Mg²⁺ ist es auch möglich, dass Strukturen mit 3 Wasserlagen ausgebildet werden. Geht eine Quellung über die Ausbildung diskreter Wasserlagen hinaus, so wird dies als osmotische Quellung bezeichnet. 2:1-Schichtsilicate, die vollständig osmotisch quellen, können in Lamellen delaminieren.

### Die Schichtsilicatlamellen des 2:1-Schichtsilicats

Die erfindungsgemäßen Schichtsilicatlamellen sind erhältlich durch die Delaminierung eines eine geordnete Wechsellagerung aufweisenden 2:1-Schichtsilicats. Die entsprechenden Schichtsilicatlamellen weisen ein durchschnittliches Aspektverhältnis von mindestens 10.000, bevorzugt von mindestens 12.000, noch bevorzugter von mindestens 15.000 und weiterhin noch bevorzugter von 20.000 auf. Bevorzugt liegt das durchschnittliche Aspektverhältnis in einem Bereich von mindestens 10.000 bis 50.000, bevorzugter in einem Bereich von mindestens 12.000 bis 50.000, bevorzugter in einem Bereich von mindestens 15.000 bis 50.000 und noch bevorzugter in einem Bereich von mindestens 20.000 bis 50.000.

Ferner ist es erfindungswesentlich, dass die Schichtsilicatlamellen eine Schichtladung nach Lagaly von mindstens 0,56 p.f.u bis maximal 0,9 p.f.u. aufweisen. Bevorzugt haben die Schichtsilicatlamellen eine Schichtladung nach Lagaly von mindestens 0,56 p.f.u, von mindestens 0,58 p.f.u., von mindestens 0,60 p.f.u., von mindestens 0,62 p.f.u., von mindestens 0,64 p.f.u., von mindestens 0,65 p.f.u. und von maximal 0,90, von maximal 0,85 p.f.u., von maximal 0,80 p.f.u., von maximal 0,75 p.f.u., von maximal 0,70 p.f.u., von maximal 0,68 p.f.u., von maximal von maximal 0,65 p.f.u. Es ist besonders bevorzugt, dass die Schichtladung der Schichtsilicatlamelle nach Lagaly in einem Bereich von mindestens 0,56 p.f.u. bis maximal 0,80 p.f.u., bevorzugter in einem Bereich von mindestens 0,56 p.f.u bis maximal 0,75 pf.u., bevorzugter in einem Bereich von mindestens 0,56 p.f.u bis maximal 0,70 pf.u., bevorzugter in einem Bereich von mindestens 0,56 p.f.u bis maximal 0,65 pf.u. liegt.

Zur Herstellung des eine geordnete Wechsellagerung aufweisenden 2:1-Schichtsilicats wird ein 2:1-Schichtsilicat (A) mit einem Lösemittelgemisch aus Wasser und einem Monoalkohol mit 1 bis 4 Kohlenstoffatomen enthaltend ein Alkylammoniumsalz behandelt.

Das 2:1-Schichtsilicat (A) weist eine Schichtladung nach Lagaly von mindstens 0,56 p.f.u bis maximal 0,9 p.f.u. aufweisen. Bevorzugt hat das 2:1-Schichtsilicat (A) eine Schichtladung nach Lagaly von mindestens 0,56 p.f.u, von mindestens 0,58 p.f.u., von mindestens 0,60 p.f.u., von mindestens 0,62 p.f.u., von mindestens 0,64 p.f.u., von mindestens 0,65 p.f.u. und von maximal 0,90, von maximal 0,85 p.f.u., von maximal 0,80 p.f.u., von maximal 0,75 p.f.u., von maximal 0,70 p.f.u., von maximal 0,68 p.f.u., von maximal von maximal 0,65 p.f.u. Es ist besonders bevorzugt, dass die Schichtladung der Schichtsilicatlamelle nach Lagaly in einem Bereich von mindestens 0,56 p.f.u. bis maximal 0,80 p.f.u., bevorzugter in einem Bereich von mindestens 0,56 p.f.u bis maximal 0,75 pf.u., bevorzugter in einem Bereich von mindestens 0,56 p.f.u bis maximal 0,70 pf.u., bevorzugter in einem Bereich von mindestens 0,56 p.f.u bis maximal 0,65 pf.u. liegt.

Ferner ist das 2:1-Schichtsilicat (A) so aufgebaut, dass die Zwischenschichten mindestens alternierend Natriumkationen aufweisen.

Das als Ausgangsmaterial verwendete 2:1-Schichtsilicat (A) ist vorzugsweise ein schmelzsynthetisch hergestelltes 2:1-Schichtsilicat.

Schmelzsynthetisch hergestellte 2:1-Schichtsilicate haben üblicherweise den Vorteil, dass diese in hoher Reinheit hergestellt werden können. Nachteilig sind allerdings der hohe zeitliche und apparative Aufwand zur Synthese sowie die damit verbundenen hohen Kosten. Bei einer Schmelzsynthese werden Verbindungen der gewünschten Metalle, wie beispielsweise Salze, Oxide oder Gläser, in stöchiometrischem Verhältnis in einem offenen oder geschlossenen Tiegelsystem zur homogenen Schmelze erhitzt und anschließend wieder abgekühlt.

Die Schmelzsynthese wird bevorzugt in einem geschlossenen Tiegelsystem durchgeführt. Bei der Synthese in einem geschlossenen Tiegelsystem können als Ausgangsverbindungen Alkalisalze/Erdalkalisalze, Erdalkalioxide, Siliziumoxide und Aluminiumoxide, bevorzugt binäre Alkalifluoride/Erdalkalifluoride, Erdalkalioxide und Siliziumoxide besonders bevorzugt LiF, NaF, MgF₂, MgO und Quarz eingesetzt werden.

Die Beschickung des Tiegels erfolgt bevorzugt so, dass zuerst die flüchtigeren Substanzen eingewogen werden. Typischerweise wird ein hochschmelzender Tiegel aus chemisch inerten oder reaktionsträgen Metall, vorzugsweise aus Molybdän oder Platin verwendet.

Bevorzugt wird der beschickte, noch offene Tiegel vor dem Verschließen im Vakuum bei Temperaturen zwischen 200°C und 1100°C, bevorzugt zwischen 400 und 900°C ausgeheizt, um Restwasser und flüchtige Verunreinigungen zu entfernen. Experimentell wird bevorzugt so verfahren, dass der obere Tiegelrand rot glühend erhitzt wird, während der untere Tiegelbereich niedrigere Temperaturen aufweist.

Optional wird eine Vorsynthese im druckfest verschlossenen Tiegel für 5-20 min bei 1700 bis 1900°C, besonders bevorzugt bei 1750 bis 1850°C durchgeführt, um die Reaktionsmischung zu homogenisieren. Das Ausheizen sowie die Vorsynthese wird typischerweise in einem Hochfrequenzinduktionsofen durchgeführt. Der Tiegel wird dabei durch eine Schutzatmosphäre (z.B. Argon), verringerten Druck oder eine Kombination beider Maßnahmen vor Oxidation geschützt. Die Hauptsynthese wird mit einem dem Material angepassten Temperaturprogramm durchgeführt. Dieser Syntheseschritt wird bevorzugt in einem Graphit-Drehrohrofen mit horizontaler Ausrichtung der Drehachse durchgeführt. In einem ersten Heizschritt wird die Temperatur mit einer Heizrate von 1 bis 50 °C/min, bevorzugt von 10 bis 20 °C/min von Raumtemperatur auf 1600 bis 1900 °C, bevorzugt auf 1700 bis 1800 °C erhöht. In einem zweiten Schritt wird bei 1600 bis 1900 °C, bevorzugt bei 1700 bis 1800 °C geheizt. Die Heizphase des zweiten Schritts dauert bevorzugt 10 bis 240 min, besonders bevorzugt 30 bis 120 min. In einem dritten Schritt wird die Temperatur mit einer Kühlrate von 10-100 °C/min, bevorzugt von 30 bis 80 °C/min auf einen Wert von 1100 bis 1500 °C, bevorzugt von 1200 bis 1400 °C gesenkt. In einem vierten Schritt wird die Temperatur mit einer Kühlrate von 0,5 bis 30 °C/min, bevorzugt von 1 bis 20 °C/min auf einen Wert von 1200 bis 900 °C, bevorzugt von 1100 bis 1000 °C gesenkt. Die Reduktion der Heizrate nach dem vierten Schritt auf Raumtemperatur (23 °C) erfolgt beispielsweise mit einer Rate von 0,1-100 °C/min, bevorzugt unkontrolliert durch Abschalten des Ofens.

Typischerweise wird unter Schutzgas wie z.B. Ar oder N₂ gearbeitet. Das schmelzsynthetisch hergestellte 2:1-Schichtsilicat (A) wird als kristalliner Feststoff nach dem Aufbrechen des Tiegels erhalten.

Vorzugsweise das 2:1-Schichtsilicat (A) nach der Synthese nochmals getempert, um die Homogenität der Probe zu erhöhen. Dabei werden üblicherweise Temperaturen im Bereich von 800 bis 1150 °C verwendet. Weiterhin bevorzugt erfolgt das Tempern bei einer Temperatur von 100 °C unterhalb des Schmelzpunktes des schmelzsynthetisch hergestellten 2:1-Schichtsilcats (A).

Es ist auch möglich die Schmelzsynthese in einem offenen Tiegelsystem durchzuführen. Bei der Synthese im offenen Tiegelsystem wird vorzugsweise eine Glasstufe der allgemeinen Zusammensetzung wSi0_{2·}xM^{a} yM^{b}-zM^{c} eingesetzt, wobei 5< w< 7; 0<x<4; 0<y<2; 0<z<1,5 und M^{a}, M^{b}, M^{c} Metalloxide und M^{a} ungleich M^{b} ungleich M^{c} sind. M^{a}, M^{b}, M^{c} können unabhängig voneinander Metalloxide, bevorzugt Li₂O, Na₂O, K₂O, Rb₂O, MgO, besonders bevorzugt Li₂O, Na₂O, MgO sein. Es gilt M^{a} ungleich M^{b} ungleich M^{c}.

Die Glasstufe wird in der gewünschten Stöchiometrie aus den gewünschten Salzen, vorzugsweise den Carbonaten, besonders bevorzugt Na₂CO₃ sowie einer Siliziumquelle wie z.B. Siliziumoxide, vorzugsweise Kieselsäure dargestellt. Die pulverförmigen Bestandteile werden durch Erhitzen und schnelles Abkühlen in einen glasartigen Zustand überführt. Bevorzugt wird die Umwandlung bei 900 bis 1500°C, besonders bevorzugt bei 1000 bis 1300°C durchgeführt. Die Heizphase bei der Herstellung der Glasstufe dauert 10 bis 360 min, bevorzugt 30 bis 120 min, besonders bevorzugt 40 bis 90 min. Dieser Vorgang wird typischerweise in einem Glaskohlenstofftiegel unter geschützter Atmosphäre und / oder reduziertem Druck mittels Hochfrequenzinduktions-Heizung durchgeführt. Die Reduktion der Temperatur auf Raumtemperatur erfolgt durch Abschaltung des Ofens. Die erhaltene Glasstufe wird dann feingemahlen, was z.B. mittels einer Pulvermühle geschehen kann.

Der Glasstufe werden weitere Reaktionspartner im Gewichtsverhältnis 10:1 bis 1:10 zugesetzt. Bevorzugt sind 5:1 bis 1:5. Dies sind beispielsweise Alkali- oder Erdalkaliverbindungen und/oder Siliziumverbindungen. Bevorzugt werden leichte Alkali-und/oder Erdalkalifluoride sowie deren Carbonate oder Oxide, sowie Siliziumoxide verwendet. Besonders bevorzugt werden NaF, MgF₂, und/oder ein ausgeglühtes Gemisch aus MgCO₃M₉(OH)₂ und Kieselsäure verwendet.

Anschließend wird das Gemisch über die Schmelztemperatur des Eutektikums der eingesetzten Verbindungen geheizt, bevorzugt auf 900 bis 1500°C, besonders bevorzugt auf 1100 bis 1400°C. Die Heizphase dauert bevorzugt 1 bis 240 min, besonders bevorzugt 5 bis 30 min. Das Aufheizen wird mit einer Heizrate von 50-500°C/min, bevorzugt mit der maximal möglichen Heizrate des Ofens durchzuführen. Die Abkühlung nach der Heizphase auf Raumtemperatur erfolgt mit einer Rate von I-500°C/min, bevorzugt unkontrolliert durch Abschalten des Ofens. Das Produkt wird als kristalliner, hygroskopischer Feststoff erhalten.

Die Synthese wird bevorzugt in einen Glaskohlenstofftiegel unter inerter Atmosphäre durchgeführt. Die Heizung erfolgt typischerweise durch Hochfrequenzinduktion.

Neben den schmelzsynthetisch hergestellten 2:1-Schichtsilicaten (A) können auch kommerziell erhältliche Ausgangsmaterialien eingesetzt werden. Diese sind beispielsweise unter den Handelsnamen Somasif der Firma CO-OP Chemical Company erhältlich oder unter dem Handelsnamen Laponite der Firma Byk Chemie GmbH.

Es ist aber auch möglich, dass das 2:1-Schichtsilicat (A) ein natürlich vorkommendes Schichtsilicat ist, d.h. dass das natürliche 2:1-Schichtsilicat (A) bereits in seiner natürlich vorkommenden Form die Bedingungen in Bezug auf die Schichtung und die Besetzung der Zwischenschichten erfüllt. Entsprechende natürliche 2:1-Schichtsilicate sind allerdings eher selten anzutreffen.

Es ist daher bevorzugt natürlich vorkommende 2:1-Schichtsilicate, welche eine Schichtladung von mindestens 0,56 aufweisen, mit einer wässrigen Lösung eines Natriumsalzes zu behandeln, um die Kationen der Zwischenschichten des natürlich vorkommenden Schichtsilicats durch Natriumkationen auszutauschen und somit ein 2:1-Schichtsilicat (A) im Sinne der vorliegenden Erfindung herzustellen.

Zur Herstellung des eine geordnete Wechsellagerung aufweisenden 2:1-Schichtsilicats wird das 2:1-Schichtsilicat (A) mit einem Lösemittelgemisch aus Wasser und einem Monoalkohol mit 1 bis 4 Kohlenstoffatomen enthaltend ein Alkylammoniumsalz behandelt.

Der Terminus "Behandeln" bedeutet im Rahmen dieser Erfindung, dass das 2:1-Schichtsilcat (A) in das Lösemittelgemisch enthaltend ein Alkylammoniumsalz eingebracht wird, um eine Suspension zu erhalten. Diese Suspension wird bevorzugt bei einer Temperatur von 10 bis 50 °C, bevorzugter bei 20 bis 35 °C und weiter bevorzugt bei Raumtemperatur (23 °C) gelagert. Die Lagerung erfolgt bevorzugt in einem Überkopfschüttler für einen Zeitraum von 1 bis 72 Stunden, bevorzugter für einen Zeitraum von 8 bis 48 Stunden und weiter bevorzugt für einen Zeitraum von 16 bis 30 Stunden, wobei die Suspension mit dem Kopfschüttler kontinuierlich bewegt wird.

Das Lösemittelgemisch zur Behandlung des 2:1-Schichtsilicats (A) ist eine Mischung aus Wasser mit einem Monoalkohol mit einem bis vier Kohlenstoffatomen. Es ist notwendig ein entsprechendes Gemisch zur Behandlung des 2:1-Schichtsilcats (A) einzusetzen, um eine partielle Exfolierung während der Austauschreaktion zu verhindern.

Das bevorzugte Mischungsverhältnis des Lösemittelgemischs liegt in einem Bereich von 1:3 (Wasser:Monoalkohol) bis 3:1 (Wasser:Monoalkohol), weiter bevorzugt in einem Bereich von 1:2 (Wasser:Monoalkohol) bis 2:1 (Wasser:Monoalkohol).

Es ist notwendig, dass das verwendete Lösemittelgemisch eine Gleichgewichtseinstellung während des partiellen Austauschs erlaubt, um die thermodynamisch stabile Wechsellagerung durch Interkalation zu ermöglichen. Zur Gleichgewichtseinstellung müssen alle beteiligten Ionenarten im Lösemittelgemisch löslich sein. So wird eine Ausheilung von Defektschichten ermöglicht, wie sie beispielsweise entstehen, wenn die Nukleation zur wechselgelagerten Phase in mehreren Schichten im Taktoid beginnt und so nach fortschreitendem Wachstum der geordneten Wechsellagerung zwei benachbarte Zwischenschichträume mit gleichen Ionen gefüllt sind. Ferner sollte eine Aufweitung des Zwischenschichtraumes im Lösungsmittel stattfinden, damit die intrakristalline Reaktion nicht kinetisch gehemmt ist.

Der Monoalkohol weist 1 bis 4 Kohlenstoffatome auf. Der Begriff Monoalkohol bezeichnet im Sinne dieser Erfindung eine Verbindung, die eine―OH Gruppe aufweist. Die Kohlenstoffkette des Monoalkohols kann verzweigt oder unverzweigt vorliegen. Bevorzugt wird der Monoalkohol ausgewählt aus der Gruppe bestehend aus Methanol, Ethanol, n-Propanol, i-Propanol, n-Butanol, i-Butanol, 2-Butanol, tert-Butanol und Mischungen daraus. Besonders bevorzugt wird der Monoalkohol gewählt aus der Gruppe bestehend aus Methanol, Ethanol, n-Propanol, i-Propanol und Mischungen daraus.

Das Alkylammoniumsalz, welches im Lösemittelgemisch aus Wasser und einem Monoalkohol enthalten ist, ist vorzugsweise ein Alkylammoniumsalz, welches in der Alkylkette zwei bis acht Kohlenstoffatome aufweist. Die Kohlenstoffkette kann verzweigt oder unverzweigt vorliegen. Die Gegenionen des Alkylammoniumsalzes werden bevorzugt ausgewählt aus der Gruppe bestehend aus Halogen, wie Chlorid und Bromid, Formiat, Methylsulfat, Sulfat, Nitrat, Hydroxid, Acetat, Phosphate und Mischungen daraus, besonders bevorzugt Chlorid, Bromid, Formiat und Methylsulfat.

Es ist bevorzugt, dass das Alkylammoniumsalz ausgewählt wird aus der Gruppe bestehend aus den Salzen des Ethylamins, n-Propylamins, n-Butylamins, sec-Butylamins, tert-Butylamins, n-Pentylamins, tert-Amylamins ,n-Hexylamins, sec-Hexylamins, n-Heptylamins, 2-Ethyl-1-hexylamins, n-Heptylamins, 2-Aminoheptans, n-Octylamins und tert-Octylamins, besonders bevorzugt aus der Gruppe bestehend aus den Salzen des Ethylamins, n-Propylamins, n-Butylamins, sec-Butylamins und tert-Butylamins.

Vorzugsweise ist die Konzentration des Alkylammoniumsalzes im Lösemittelgemisch 0,5 bis 100,0 mmol/L, besser 1,0 bis 50,0 mmol/L, besser 2,5 bis 6,0 und noch besser 3,0 bis 4,0 mmol/L. Vorzugsweise enthält das Lösemittelgemisch leidglich eine Art eines Alkylammoniumsalzes.

Nach Behandlung des Schichtsilicats (A) mit einem Lösemittelgemisch enthaltend ein Alkylammoniumsalz zur Herstellung des eine geordnete Wechsellagerung aufweisenden 2:1-Schichtsilicats wird in Schritt (ii) das 2:1-Schichtsilicat vom Lösemittelgemisch enthaltend das Alkylammoniumsalzes separiert. Als Separationstechniken kommen prinzipiell alle dem Fachmann geläufigen fest-flüssig-Trennmethoden in Betracht, insbesondere die Filtration, das Abdekantieren oder auch das Abdampfen von Lösemittel.

Vorzugsweise wird das in Schritt (ii) separierte 2:1-Schichtsilicat mit einem Lösemittelgemisch aus Wasser und einem Monoalkohol mit 1 bis 4 Kohlenstoffatomen gewaschen. Bevorzugt weist das Lösemittelgemisch die gleiche Lösemittelzusammensetzung auf, wie das unter (i) verwendete Lösemittelgemisch. Bevorzugt wird der Waschvorgang ein bis fünfmal, besser zwei bis viermal wiederholt. Vorzugsweise erfolgen im Anschluss an diesen Waschvorgang nochmals ein bis vier, besser zwei bis drei Waschvorgänge mit dem Monoalkohol des Lösemittelgemischs alleine.

In Schritt (iii) erfolgt die Delaminierung des 2:1-Schichtsilicats (WL) durch Einbringen des zuvor in Schritt (ii) separierten 2:1-Schichtsilicats (WL) in Wasser. Das Einbringen in Wasser bewirkt die osmotische Quellung der Kationen in den Zwischenschichten, so dass es zu einer Delaminierung kommt.

Üblicherweise geschieht der Vorgang der Delaminierung in einem zeitlich begrenzten Rahmen. Dies bedeutete, dass die Delaminierung vorzugsweise innerhalb von 60 Minuten, besser innerhalb von 30 Minuten und noch besser innerhalb von 15 Minuten geschieht. Es ist ganz besonders bevorzugt, dass die Delaminierung als sogenannte "spontane Delaminierung" abläuft. Der Begriff der "spontanen Delaminierung" ist in der Literatur weit verbreitet und bedeutet, dass das 2:1-Schichtsilicat (WL) innerhalb weniger Sekunden bis hin zu wenigen Minuten in seine Schichtsilicatlamellen delaminiert. Es ist daher besonders bevorzugt, dass das 2:1-Schichtsilicat (WL) innerhalb von 5 Minuten, weiterhin bevorzugt innerhalb von 3 Minuten, noch weiter bevorzugt innerhalb von 1 Minute und ganz besonders bevorzugt in weniger als 1 Minute delaminiert.

Die Delaminierung des 2:1-Schichtsilicats im Rahmen dieser Erfindung erfolgt vorzugsweise bereits ohne das Einwirken äußerer Scherkräfte, nachdem das 2:1-Schichtsilicat (WL) in Wasser eingebracht wurde.

Zur Delaminierung wird das 2:1-Schichtsilicat in Wasser eingebracht. Vorzugsweise ist das verwendete Wasser vollentsalztes Wasser (VE-Wasser), weiterhin bevorzugt ist die Kationenkonzentration im verwendeten Wasser kleiner als 100 mmol/l, bevorzugt kleiner als 5 mmol/l. Bevorzugt liegt der Anteil organischer Verunreinigungen bei weniger als 20 Vol-%, bevorzugt bei weniger als 5 Vol.-%

Die Delaminierung des 2:1-Schichtsilicats (WL) in Wasser führt dazu, dass eine wässrige Dispersion gebildet wird, die die erfindungsgemäßen Schichtsilicatlamellen enthält. In Schritt (iv) erfolgt die Separation der Schichtsilicatlamellen aus dieser wässrigen Dispersion. Als Separationstechniken kommen prinzipiell alle dem Fachmann geläufigen fest-flüssig-Trennmethoden in Betracht, insbesondere die Filtration, das Abdekantieren oder auch das Abdampfen von Lösemittel.

Ein weiterer Gegenstand der vorliegenden Erfindung ist eine wässrige Dispersion enthaltend die erfindungsgemäßen Schichtsilicatlamellen.

Die erfindungsgemäße wässrige Dispersion kann als sogenanntes Zwischenprodukt der Delaminierung des 2:1-Schichsilicats (WL) erhalten werden. Eine entsprechende wässrige Dispersion wird in Schritt (iii) durch Einbringen des 2:1-Schichtsilicats (WL) in Wasser erhalten. Ferner umfasst die erfindungsgemäße wässrige Dispersion aber auch eine wässrige Dispersion der erfindungsgemäßen Schichtsilicatlamellen, welche durch Redispergieren der nach Schritt (iv) erhaltenen Schichtsilicatlamellen erhältlich ist.

Ein weiterer Gegenstand der vorliegenden Erfindung ist ein Verfahren zur Herstellung der erfindungsgemäßen Schichtsilicatlamellen durch die Delaminierung eines eine geordnete Wechsellagerung aufweisenden 2:1-Schichtsilicats in Wasser. Die entsprechend anzuwendenden Verfahrensschritte wurden bereits vorstehend ausführlich beschrieben. Für das erfindungsgemäße Verfahren gilt das zuvor Ausgeführte in gleicher Weise.

### Die Verwendung und das Verbundmaterial

Ferner ist die Verwendung der erfindungsgemäßen Schichtsilicatlamellen zur Herstellung eines Verbundmaterials Gegenstand der vorliegenden Erfindung.

Der Begriff Verbundmaterial, auch bezeichnet als Verbundwerkstoff, ist dem Fachmann geläufig und ist die Sammelbezeichnung für solche Werkstoffe, die durch Kombination unterschiedlicher Materialien erhalten werden und deren chemische und physikalische Eigenschaften die der Einzelkomponenten übertreffen. (vgl. Römpp Chemie Lexikon, Band 6. T - Z, 9. erweiterte und neubearbeitete Auflage, Georg Thieme Verlag 1995, S. 4886). Als Bestandteile der Verbundmaterialien kommen hauptsächlich Metalle, Holz, Gläser, Polymere und keramische Werkstoffe in Frage, die zu Faser, Band-, Schicht- und Teilchenverbundwerkstoffen verarbeitet werden können.

Im Rahmen der vorliegenden Erfindung umfasst ein erfindungsgemäßes Verbundmaterial mindestens ein Polymer sowie die erfindungsgemäßen Schichtsilicatlamellen.

Gerade der Einsatz des Verbundmaterials als Diffusionsbarriere bietet zahlreiche Vorteile, da Diffusionsprozesse allgegenwärtig sind und in vielen Fällen Probleme von marktwirtschaftlicher Relevanz verursachen.

Beispielsweise ist die Lebensdauer von CDs und DVDs auf wenige Jahrzehnte beschränkt, da die Polycarbonatunterseite durchlässig für Sauerstoff und Wasser ist, wodurch die metallische Aluminiumreflektionsschicht kontinuierlich oxidiert und dadurch trübt.

Ein weiteres Problem tritt in der Verpackungsindustrie auf, da die Permeabilität von Standardverpackungen relativ hoch ist, muss hier auf Barrieretechnologien ausgewichen werden. Durch die Verarbeitung der erfindungsgemäßen Schichtsilicatlamellen in Verpackungsmaterialien und -folien für die Lebensmittelindustrie kann somit die Haltbarkeit von Lebensmitteln erhöht werden, da das extreme Aspektverhältnis der Schichtsilicatlamellen die Diffusionswege von Gasen, wie beispielsweise Sauerstoff, Wasserstoff, und gasförmigem Wasser stark verlängert werden und somit die Barriereeigenschaften verbessert werden können.

Es bietet sich aber nicht nur an die erfindungsgemäßen Schichtsilicatlamellen in Lebensmittelverpackungen einzuarbeiten, um das Einwirken äußerer Einflüssen, wie beispielsweise das Eindringen von Sauerstoff, in die Verpackung zu verhindern. Die erfindungsgemäßen Schichtsilicatlamellen eignen sich auch dazu beispielsweise in Materialien zur Herstellung von Kunststoffflaschen eingearbeitet zu werden, um das Austreten von CO₂ aus kohlensäurehaltigen Getränken zu vermeiden.

Zur Herstellung von Verbundmaterialien enthaltend die erfindungsgemäßen Schichtsilicatlamellen können diese in alle gängigen Polymer eingebracht werden, die durch Polykondensation, Polyaddition, radikalische Polymerisation, ionische Polymerisation und Copolymerisation hergestellt wurden. Beispiele für derartige Polymere sind Polyurethane, Polycarbonate, Polyamide, Polymethylmethacrylate (PMMA), Polyester, Polyolefine, Kautschuk, Polysiloxane, Ethylen-Vinylalkohol-Copolymere (EVOH), Polylactide, Polystyrole, Polyethylenoxide (PEO), Polypropylenoxide (PPO), Polyacrylnitrile (PAN) und Polyepoxide.

Das Einbringen der erfindungsgemäßen Schichtsilicatlamellen in das Polymer zur Herstellung des Verbundmaterials kann mittels dem Fachmann bekannter gängiger Techniken erfolgen. Dazu zählen beispielsweise das Mischen in Lösung, die in-situ-Polymerisation oder das Mischen in Schmelze.

Die vorliegende Erfindung umfasst auch entsprechende Verbundmaterialien, welche die erfindungsgemäßen Schichtsilicatlamellen enthalten. Diese als erfindungsgemäß bezeichneten Verbundmaterialien werden vorzugsweise als Diffusionsbarriere oder als Flammschutzmittel verwendet.

### Beispiele

### Chemikalien und Materialien

Zur Schmelzsynthese eines 2:1- Schichtsilicates (A1) wurde NaF (99.995%, Alfa Aesar), LiF (>99.9%, ChemPur), MgF₂(>99.9%, ChemPur, fused lump 1-3 mm), MgO (99.95%, Alfa Aesar, fused lump 1-3 mm), MgO (99.95, Alfa Aesar, powder) und SiO₂ (Merck, fine granular quarz, p.a., calciniert) verwendet. Die Chemikalien wurden in einer Glovebox unter trockenem Argon gelagert. Die Molybdän-Tiegel (25 mm Außendurchmesser, 21 mm Innendurchmesser, 143 mm Innenlänge) wurden durch Bohren aus einem reinen Molybdän-Stab hergestellt. Der Tiegel wurde mit Aceton gewaschen, im Ultraschallbad und mit VE-Wasser gereinigt. Zur abschließenden Reinigung wurde er vor Verwendung unter Hochvakuum (<1.0×10⁻⁷ bar) für 5 min auf 1600°C erhitzt.

Die Herstellung von n-Alkylammoniumlösungen zur experimentellen Bestimmung der Schichtladung erfolgte durch Titration der n-Alkylamine mit HCl (32%, NORMAPUR, VWR) oder HCl (2M, Titripur, Sigma Aldrich). Es wurden n-Butylamin (99.5%, Sigma Aldrich), n-Pentylamin (>98%, TCI Chemicals), n-Hexylamin (99.9% Aldrich), n-Heptylamin (99.9%, Sigma Aldrich), n-Octylamin (95%, Sigma Aldrich), n-Nonylamin (>99%, Alfa Aesar), n-Decylamin (95%, Sigma Aldrich), n-Undecylamin (>98%, Sigma Aldrich) und n-Dodecylamin (>98%, Sigma Aldrich) verwendet.

Als Lösemittel wurde Ethanol ((absolut, VWR), VE-Wasser, Millipore- Wasser (18.2 µS/cm) und bidestilliertes Wasser verwendet. Soweit nicht anders angegeben wurde VE-Wasser verwendet.

Die Neutralisierung von n-Butylamin für die Verwendung zum partiellen Austausch erfolgte durch Herstellen einer Maßlösung mit Ameisensäure (p.a., Sigma Aldrich).

Zum Feststoffaufschluss wurden HCl (30 Gew.%, Merck, SUPRAPUR), H₃PO₄ (85 Gew.%, Merck, EMSURE), HNO₃ (65 Gew.%, Merck, SUPRAPUR) und HBF₄ (48 Gew.%, Sigma Aldrich) verwendet.

Zur Bestimmung der Kationenaustauschkapazität wurde [Cu(trien)]SO₄ verwendet. Die 0,01 M Maßlösung wurde aus CuSO₄ (zur Analyse, Grüsing, calciniert 24 h, 250°C) und Triethylentetramin (>97%, Sigma Aldrich) hergestellt.

### Methodenbeschreibung

### Pulverdiffraktometrie

### Transmissionsgeometrie

Pulverdiffraktogramme des nachfolgend beschriebenen schmelzsynthetisch hergestellten 2:1-Schichtsilicats (A) zur Strukturaufklärung wurden in Transmissionsgeometrie auf einem STOE Stadi P Diffraktometer mit MYTHEN1K Detektor und Cu-K_{α1}-Strahlung (λ= 1.54056 Ä) aufgenommen. Zur Minimierung von Textur-Effekten wurden Glaskapillaren (0,7 mm, Hilgenberg, Glas Nr. 10) verwendet. Vor der Messung wurde die Probe vier Wochen in Exsikkatoren über gesättigten Lösungen von K₂CO₃ (43% relative Luftfeuchte) und K₂SO₄ (98% relative Luftfeuchte) gelagert. Trocken zu messende Proben wurden für 24 h bei 150°C getrocknet.

### Bragg-Brentano-Geometrie

Alle weiteren Pulverdiffraktogramme wurden in Bragg-Brentano-Geometrie auf einem Panalytical XPERTPRO-Diffraktometer gemessen. Texturpräparate wurden durch Auftropfen auf Glasobjektträger (Gerhard Menzel GmbH) aus ethanolischer Suspension hergestellt. Die Messung erfolgte bei Raumtemperatur (23 °C).

### Feuchtekammer

Messungen in der Feuchtekammer wurden im XPERTPRO-Diffraktometer in einer Feuchtekammer von Anton Paar mit einem Feuchtegenerator (RH-200, VTI corp.) durchgeführt. Es wurde im Bereich von 10% bis 95% relativer Luftfeuchte gemessen. Die Proben wurden bei jedem Schritt äquilibriert, bis keine Änderung der Reflex-Positionen zu beobachten war (mindestens für 90 min) und vor dem Adsorptionsexperiment bei 80 °C ausgeheizt bis ausschließlich die Struktur mit keiner Wasserlage zu messen war. Die Messung erfolgte bei 30 °C.

### Experimentelle Schichtladungsbestimmung

Die experimentelle Bestimmung der Schichtladung kann nach der Methode von Lagaly (vgl. A. R. Mermut, G. Lagaly, Clays Clay Miner. 2001, 49, 393-397) über die Einlagerung von n-Alkylammoniumlösungen mit unterschiedlichen n-Alkylkettenlängen und der Messung der resultierenden Schichtabstände. Dazu wurden ca. 90 mg der Probe für mindestens 2 h im Überkopfschüttler in 3 mL Ethanol/Wasser (1:1) suspendiert. Es wurden 2,5 mL der n-Alkylammoniumlösung (2 M für Kettenlänge n = 4 bis 6, 0,5 M für n = 7 bis 10, 0.1 M für n = 11 und 12) zugegeben und die Probe bei 60°C im Trockenschrank gelagert (mindestens 3 h). Nach Zentrifugieren und Abdekantieren wurde die Zugabe fünfmal wiederholt. Abschließend wurde zehnmal mit Ethanol/Wasser (1:1) und zweimal mit Ethanol gewaschen. Die Texturproben zur Pulverdiffraktion wurden bei 60°C getrocknet (24 h) und innerhalb von 10 min in Bragg-Brentano-Geometrie gemessen.

### Bestimmung der CEC

Die Bestimmung der CEC wurde nach der Cu(trien)-Methode durchgeführt (vgl. L. Ammann, F. Bergaya, G. Lagaly, Clay Miner. 2005, 40, 441-453). Hierzu wurden ca. 45 mg des schmelzsynthetische hergestellten 2:1-Schichtsilicats (A1) für 24 h bei 150°C ausgeheizt, in der Glovebox unter trockenem Argon für 24 h gelagert und dort abgewogen. Es wurden 10 mL Wasser zugegeben, die Probe wurde für 24 h im Überkopfschüttler gequollen, um im Anschluss 5 mL 0,01 M [Cu(trien)]SO₄-Lösung zuzugeben. Der Austausch wurde für 24 h durchgeführt. Die Probe wurde zentrifugiert (10000 U/min, 20 min, 20°C) und die Cu-Konzentration der überstehenden Lösung auf einem UV/VIS-Spektrometer (Cary 300) gemessen. Hierzu wurde das Absorptionsmaximum von [Cu(trien)]²⁺ bei 577 nm verwendet. Als Kalibrationsstandards dienten 1:1, 1:3; 1:9 und 1:19 verdünnten [Cu(trien)]SO₄-Stammlösungen.

### Partikelgrößenbestimmung

Zur Partikelgrößenbestimmung wurden die Proben zunächst in einer 1 Gew.-% Suspension aus vollentsalztem Wasser für 24 h gequollen.

### Statische Lichtstreuung (static light scattering, SLS)

Zur Bestimmung der Partikelgrößen wurde die Methode der statischen Lichtstreuung verwendet gemäß DIN 13320 (Stand: 2009). Dazu wurde mit einem Retsch LA-950 (Horiba) Gerät die Messroutine des Herstellers "Schichtsilicate in Wasser" verwendet. Hier betrug der Brechungsindex für die feste Phase 1,5. Das Messprogramm bestimmte die optimale Transmissionsrate und optimierte so die Konzentration der Suspension. Es wurde die Anzahl gewichtete Partikelgrößenverteilung bestimmt.

### SAXS (Small Angle X-ray Scattering) Messungen

Die erfindungsgemäßen Schichtsilicatlamellen wurden auf einem Kleinwinkelbeugungs-System der Art Double Ganesha AIR (SAXSLAB) gemessen. Die Röntgenquelle war eine rotierende Anode (Cu, MicroMax 007HF, Rigaku Corp.) die einen mikrofokussierten Strahl liefert. Es wurde der ortsaufgelöste Detektor PILATUS 300K (Dectris AG) verwendet. Die Messung erfolgte in Glaskapillaren von 1 mm Durchmesser (Glas Nr. 50, Hilgenberg) bei Raumtemperatur (23 °C). Die radial gemittelten Daten wurden auf den Primärstrahl und die Messzeit normiert, bevor das Lösemittel entfernt wurde. Die Datenanalyse wurde gemäß M. Stöter, B. Biersack, S. Rosenfeldt, M. J. Leitl, H. Kalo, R. Schobert, H. Yersin, G. A. Ozin, S. Förster, J. Breu, Angew. Chem. Int. Ed. 2015, 54, 4963-4967 durchgeführt.

SAXS Messungen ermöglichen die Messung bis zu extrem kleinen Streuwinkeln, so dass große Schichtabstände sichtbar gemacht werden können. Der d-Wert, insbesondere d(001) entspricht dem mittleren Abstand der osmotisch gequollenen Lamellen.

### Rasterkraftmikroskopie (Atomic Force Microscopy, AFM)

Rasterkraft-Aufnahmen wurden im Tapping Mode auf einem Dimension 3100 NanoScope IV-AFM mit einem OTESPA-R3 (Bruker) Silizium-Cantilever gemessen. Die Drive Amplitude betrug 249,5 Hz. Die Proben wurden durch Auftropfen einer Dispersion in Millipore-Wasser (ca. 0,05 g/L) auf einen Silizium-Wafer und durch Trocknung unter Umgebungsluftfeuchte und Raumtemperatur (23 °C) vorbereitet. Vor der Messung wurden die Proben für 1 h bei 80°C getrocknet.

Die nachfolgenden Beispiele dienen der Erläuterung der Erfindung, sind jedoch nicht einschränkend auszulegen.

### Synthese des 2:1-Schichtsilicats (A1)

Zur Synthese des 2:1-Schichtsilicats (A1), welches die nominelle Zusammensetzung Na_{0.65}[Mg_{2.4}Li_{0.55}□₀.₀₅]Si₄O₁₀F₂ aufweist, wurden 3,381 g NaF 41,988 g/mol, 80,53 mmol, 0.65 äq), 1,768 g LiF (25,939 g/mol, 68,14 mmol, 0,55 äq), 3,088 g MgF₂ (62,301 g/mol, 49,56 mmol, 0,4 äq), 9.987 g MgO (40,304 g/mol, 247,78 mmol, 2 äq), 29,777 g SiO₂ (60,084 g/mol, 247,79 mmol, 4 äq) in einer Glovebox unter trockenem Argon in einen Molybdän-Tiegel eingewogen.

Die Synthese bestand insgesamt aus fünf Schritten: (A) dem Ausheizen der Syntheseapparatur, (B) dem Zuschmelzen des Tiegels, (C) der Prüfung der Dichtigkeit des Tiegels (D) der Schmelzsynthese und (E) dem Tempern.
(A) Um die Oxidation des Tiegels zu vermeiden, wurde unter Hochvakuum (<10⁻⁷ bar) und damit bei einer Sauerstofffugazität unterhalb des Stabilitätsbereiches von Molybdänoxid gearbeitet. Der Tiegel wurde mit einer ca. 1 cm schmalen Kupferspule aus vier eng beieinanderliegenden Windungen induktiv ausgeheizt, um Wasser zu entfernen. Dabei wurde bei moderaten Temperaturen ca. 250°C gearbeitet, um die Verflüchtigung von Fluoriden im Hochvakuum zu vermeiden.
(B) Der Deckel des Tiegels wurde unter Hochvakuum abgesenkt. Mit Hilfe der schmalen Kupferspule, die das kurzzeitige Erhitzen auf knapp 3000°C ermöglicht, wurde der Tiegel zugeschweißt. Hierbei wurde vom unteren Ende des Tiegels mit einem wasserdurchströmten Kupferrohr gekühlt. Damit sollte verhindert werden, dass die Fluoride im unteren Bereich des Tiegels schmelzen, da diese sonst im Hochvakuum partiell verdampfen würden. Aus diesem Grund wurden die Fluoride als erstes in den Tiegel eingewogen.
(C) Das so erhaltene Reaktionsgefäß wurde auf einem Korund-Stab mit einer breiten Kupferspule aus 22 Windungen kurzzeitig auf ca. 1750°C erhitzt, um die Dichtigkeit des Tiegels zu prüfen.
(D) Der Tiegel wurde in einem Drehrohrofen (HT-1900-Graphit, Linn High Term) bei ca. 45 U/min unter Argon innerhalb von 30 min auf 400°C erhitzt. Die Maximaltemperatur von 1750°C wurde innerhalb von weiteren 90 min erreicht. Die Haltezeit bei dieser Temperatur betrug 70 min. Anschließend wurde innerhalb von 8 min auf 1300°C abgekühlt, in weiteren 25 min auf 1050°C, bevor der Ofen abgeschaltet wurde.
(E) Das erhaltene Material wurde gemahlen (250 U/min, 20 min, Retsch PM-100), über Nacht bei 250°C unter Vakuum (<0.1 mbar) getrocknet und in einer Glovebox unter Argon in einen Molybdän-Tiegel gefüllt. Der Tiegel wurde wie unter (A) und (B) beschrieben ausgeheizt und zugeschweißt. Das gasdichte Reaktionsgefäß wurde in eine Quarzampulle gegeben, die unter Vakuum (<0.1 mbar) zugeschmolzen wurde. Es folgt das Tempern des Materials bei 1045 °C.

Mittels Röntgenpulverdiffraktion konnte nachgewiesen werden, dass das 2:1-Schichtsilicat (A1) die nominelle Zusammensetzung Na_{0.65}[Mg_{2.4}Li_{0.55}□_{0.05}]Si₄O₁₀F₂ aufweist. Zur Bestimmung der nominellen Zusammensetzung wurde das gemessene Pulverdiffraktogramm der kristallin gequollenen Phase mit 2 Wasserlagen verwendet. Nach H. Kalo (vgl. H. Kalo, W. Milius, J. Breu, RSC Adv. 2012, 2, 8452-8459 und H. Kalo, Dissertation, Universität Bayreuth, 2012) wurde eine monokline Zelle verwendet (C2/m, No. 12). Die Startparameter zur Verfeinerung wurden aus H. Kalo, W. Milius, J. Breu, RSC Adv. 2012, 2, 8452-8459 wurden übernommen und so angepasst, dass die *00I*-Serie sowie die 060-Bande gefunden werden konnten. Die resultierenden Gitterkonstanten sind in Tabelle 2 gezeigt.

**Tabelle 1: Gitterkonstanten-Verfeinerung von (A1) mit 2 Wasserlagen (Monoklin, C2/m (12)) mit Hilfe von Startparametern aus H. Kalo, W. Milius, J. Breu, RSC Adv. 2012, 2, 8452-8459. Die Parameter wurden so angepasst, dass die 00I-Serie und die 060- Bande gefunden werden konnten.**

| | a [Å] | b [Ä] | c [Ä] | α = γ [°] | β [°] |
|---|---|---|---|---|---|
| (A1) | 5.245(3) | 9.077(4) | 15.217(9) | 90 | 96.591(9) |
| (2 Wasserlagen) | | | | | |

Die Schichtladung des 2:1-Schichtsilicats (A1) wurde experimentell nach Lagaly bestimmt. Dazu wurden n-Alkylammoniumionen verschiedener Kettenlänge (CₙH₂ₙ₊₁NH₃⁺), deren Ladungsäquivalentfläche bekannt ist, in die Zwischenschichten von (A1) eingelagert. In Abhängigkeit davon, ob sich bei einer bestimmten Kettenlänge des Alkylrests Monolagen (d₀₀₁ = 13.1 bis 13.3 Ä) oder Bilagen (d₀₀₁ = 17.5 bis 17.8 Ä) ausbildeten und ab welcher Kettenlänge dies nicht mehr möglich war, konnte der Bereich der Schichtladung aufgrund der bekannten Ladungsäquivalentfläche eingegrenzt werden.

Der Übergang von Monolage (n = 4) zu höheren d-Werten (n = 5) schränkte die obere Grenze der Schichtladung auf ≤0,65 p.f.u. und >0,56 p.f.u ein. Bei n = 7 wurde erstmals ein Überstrukturreflex aus Bilage/Monolage-Wechsellagerung sichtbar, die Serie ist jedoch nicht rational (cv = 1,58%). Eine geordnete Wechsellagerung (cv = 0,67%) lag bei n = 8 vor. Eine dicht gepackte Bilage n-Octylammonium (n = 8) entspricht einer Schichtladung von 0,80 p.f.u., eine Monolage entspricht 0,40 p.f.u. Die geordnete Wechsellagerung entsprach nach diesem Modell einer Schichtladung von 0,60 p.f.u.. Des Weiteren lagen bis n = 11 (0,62 p.f.u.) Bilagen vor (17.7 Ä). Für n = 12 (0.58 p.f.u) wurde eine Verschiebung des Reflexes beobachtet. Damit lag die experimentell bestimmte Schichtladung von (A1) im Bereich von 0,65 p.f.u. und 0,62 p.f.u.

SLS-Messung des 2:1-Schichtsilicats (A1) zeigt, dass das 2:1-Schichtsilicat (A1) eine laterale Größenausdehnung von ca. 10 bis 20 µm Durchmesser im Median aufwies. Der plättchenförmige Kristallhabitus von Taktoiden hoher lateraler Ausdehnung im Bereich von ca. 10 bis 150 µm ist in Fig. 3 anhand von REM-Aufnahmen zu erkennen.

### Synthese eines eine geordnete Wechsellagerung aufweisenden 2:1-Schichtsilicats (WL1)

Zur Synthese eines eine geordnete Wechsellagerung aufweisenden 2:1-Schichtsilicats (WL1) wurde ein partieller Austausch der Zwischenschichtkationen des 2:1-Schichtsilicats (A1) durch Behandlung mit einer Lösemittelgemisch aus Wasser und Ethanol (v:v, 1:1) enthaltend n-Butylammoniumformiat durchgeführt. Um der im Wesentlichen vom Lösungsmittel vorgegebenen, aber unbekannten Gleichgewichtsverteilung eine 50:50-Besetzung (gleiche Wahrscheinlichkeit) der beiden unterschiedlichen Zwischenschichten zu erreichen, wurden unterschiedliche Anteile der CEC zugegeben.

Die allgemeine Vorschrift lautete: 10 bis 35 mg des 2:1-Schichtsilicats (A1) wurden in Zentrifugengläser eingewogen (abgedichtet mit einem Septum) und in 2 mL Ethanol/Wasser (v:v, 1:1) für 12 h gequollen. Anschließend erfolgte die Zugabe von n-Butylammoniumformiat (0,05 M). Zuvor wurde durch die erneute Zugabe von Ethanol und Wasser sichergestellt, dass die Konzentration des n-Butylammoniumformiat nach dessen Zugabe 3,5 mmol/L betrug. Die so erhaltene Suspension wurde 24 Stunden in einem Überkopfschüttler bei 23 °C bewegt. Anschließend wurde dreimal mit einem Gemisch aus Ethanol/Wasser (v:v, 1:1) und einmal mit Ethanol gewaschen.

Zur Vorbereitung von Texturpräparaten zur Messung von Pulverdiffraktogrammen wurde das Produkt in Ethanol suspendiert auf einen Glasobjektträger aufgetropft. Das Lösemittel wurde durch Verdampfen bei 23 °C (Raumtemperatur) entfernt. Anschließend wurde der Glasobjektträger mit dem Produkt 12 Stunden bei 60°C ausgeheizt und 24 Stunden bei 43% relativer Luftfeuchte äquilibriert.

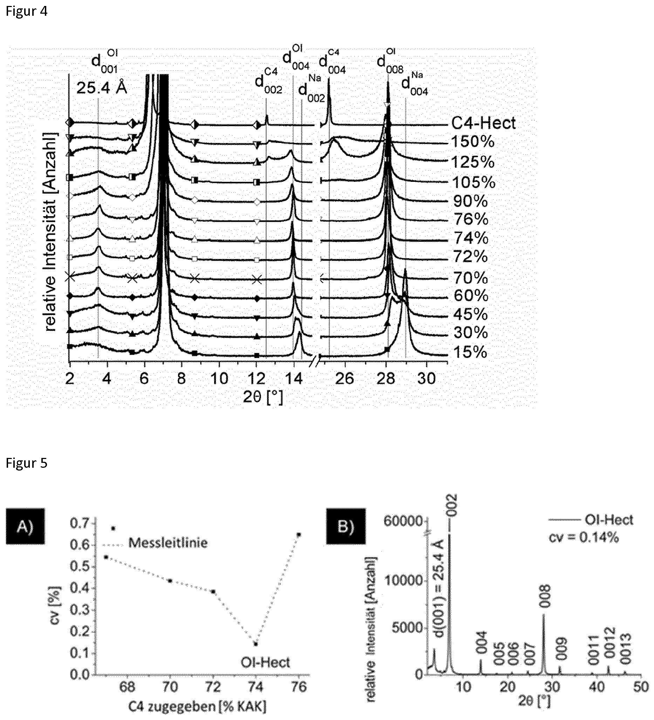

Die Quellung von (A1) im Lösemittelgemisch Ethanol/Wasser (v:v, 1:1) entspricht der kristallinen Struktur von (A1) mit zwei Wasserlagen mit einer sehr niedrigen Halbwertsbreite des 001-Reflexes von 0,06°. Im entsprechenden Lösemittelgemisch wurden unterschiedliche Anteile der CEC von n-Butylammonium zugegeben (15 bis 200%). Hierbei wurde die Konzentration des Adsorbats konstant bei 3,5 mmol/L gehalten. Die erhaltenen Produkte wurden röntgenographisch charakterisiert, siehe Figur 4. Die Aufnahmen wurden nach Quellung bei 43% relativer Luftfeuchte aufgenommen. Eingezeichnet ist der d₀₀₁-Reflex des wechselgelagerten 2:1-Schichtsilicats (WL1) bei 25,4 Ä (12,3 Ä, 1 Wasserlage Na und 13,1 Ä, 0 Wasserlagen C4). Des Weiteren sind der 004- und 008-Reflex dieser Phase angegeben. Ebenso sind die 002- und 004-Reflexe der Natrium- und der reinen n-Butylammoniumform gekennzeichnet. Bei einer Zugabe von 15% der CEC wurde eine leichte Verschiebung des Natriumreflexes festgestellt, was auf eine Wechsellagerung hindeutet. Der Überstrukturreflex der Wechsellagerung ist zunächst breit und weist eine geringe Intensität auf, was durch Abweichungen von Reichweite 1 und/oder statistischen Verteilung der alternierenden Schichten hindeutet. Die Intensität dieses Reflexes stieg mit zugegebener Menge an n-Butylammonium an. Gleichzeitig verschoben sich die weiteren Reflexe Richtung geordneter Wechsellagerung. Eine rationale Serie wurde erstmals bei einer Zugabe von 60% der CEC beobachtet. Bis zu einer Zugabe von 90% der CEC blieb die Serie rational, was den breiten Stabilitätsbereich der wechselgelagerten Phase unterstreicht. Bei einer Zugabe von 105% der CEC verschoben sich die Reflexe in Richtung der reinen n-Butylammoniumform, die bei 43% relativer Luftfeuchte einen d-Wert von 14,0 Ä aufwies. Bei 125% Zugabe der CEC lagen zwei Phasen vor. Bei einer Zugabe von 150% der CEC war eine starke Verschiebung des d-Wertes zu beobachten, welche der komplett ausgetauschten Phasen zugeordnet werden konnte.

Wie aus Figur 5 ersichtlich, wurde das Minimum des Variationskoeffizienten (cv = 0.14%) bei einer Zugabe von 74% der Austauschkapazität gefunden.

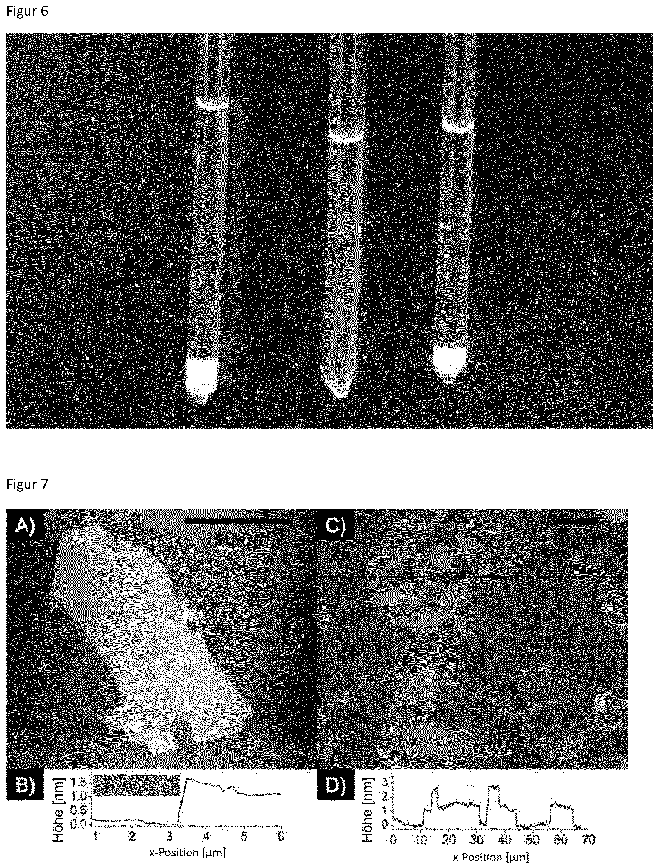

Zur Untersuchung der Delaminerung des eine geordnete Wechsellagerung aufweisenden 2:1-Schichtsilicats in Wasser wurden Dispersionen mit unterschiedlichen Feststoffgehalten hergestellt. Hierbei bildete sich bei hohen Feststoffgehalten (15 Gew.-%) ein Gel, das auch bei Verdünnung auf 0,5 Gew.-% eine über mehrere Wochen stabile Dispersion bildete. Hierbei trat eine Bildung von ,Schlieren' auf. Ein ähnliches Verhalten für das 2:1-Schichtsilicat (A1) und das vollständig mit n-Butylammoniumkationen ausgetauschte 2:1-Schichtsilicat war nicht zu beobachten, Figur 6. Diese 2:1-Schichtsilicate sanken nach Einbringen in Wasser innerhalb weniger Sekunden als Feststoff zu Boden des Gefäßes.

Quantitative Informationen über das beschriebene Quellverhalten des eine geordnete Wechsellagerung aufweisenden 2:1-Schichtsilicats (WL1) konnten über Kleinwinkelröntgenbeugung (SAXS) erbracht werden. Diese zeigte, dass eine uniforme Quellung mit gleichem Abstand zwischen den einzelnen Silicatlamellen vorliegt. Bei einer 10 Gew.-% Probe wurde eine Aufweitung des Zwischenschichtabstandes auf 168 Ä durch osmotische Quellung beobachtet. Der Abfall der Intensität mit q⁻² in diesem Bereich war typisch für schichtförmige Objekte. Das Minimum der Formfaktor- Oszillation bei einem Streuvektor von q = 0.70 Å⁻¹ (dₘᵢₙ = 9 Ä), zeigte die Delaminierung in einzelne Lamellen. Als Charakteristik der a,b-Ebene der Schichten ist die 02/11-Bande im Weitwinkelbereich bei einem Streuvektor von 1.38 Ä sichtbar. Die starke Fluktuation der Messpunkte in diesem Bereich war unvermeidlich, da hier die Probe ähnlich stark streut wie das Lösemittel.

Die Delaminierung in einzelne Lamellen wurde des Weiteren durch AFM-Messungen bestätigt. Da die Dicke einer Silicatlamelle ohne Helmholtzschicht der hydratisierten Gegenionen 9,6 Ä (ca. 1 nm) beträgt, konnten alle Schichtsilicatlamellen, die in AFM-Aufnahmen kleiner als 2 nm sind, einzelnen Lamellen zugeordnet werden. Aufgrund der Hydratisierung der Ionen unterhalb und oberhalb der Lamellen wurden Schichtdicken >1 nm erwartet. Figur 7 zeigt typische Aufnahmen von Lamellen (A und C) und deren Höhenprofil (B und D). In Teil A der Figure ist eine freiliegende, einzelne Silicatlamelle gezeigt. Teil B zeigt eine Ansammlung von mehreren Plättchen, die beim Trocknen statistisch übereinander zu liegen kamen. Es traten diskrete Stufen von 1,3 bis 1,4 nm auf, folglich handelt es sich um delaminierte, einzelne Lamellen.

## Patentansprüche

1. Schichtsilicatlamellen erhältlich durch die Delaminierung eines eine geordnete Wechsellagerung aufweisenden 2:1-Schichtsilicats in Wasser umfassend wenigstens die Schritte
(i) Herstellung des eine geordnete Wechsellagerung aufweisenden 2:1-Schichtsilicats durch Behandlung eines 2:1-Schichtsilicats (A), mit einem Lösemittelgemisch aus Wasser und einem Monoalkohol mit 1 bis 4 Kohlenstoffatomen, welches ein Alkylammoniumsalz enthält, wobei das 2:1-Schichtsilicat (A) eine Schichtladung nach Lagaly von 0,56 p.f.u. bis 0,90 p.f.u. aufweist und die Zwischenschichten mindestens alternierend Natriumkationen aufweisen,
(ii) Separieren des eine geordnete Wechsellagerung aufweisenden 2:1-Schichtsilicats von dem Lösemittelgemisch des Alkylammoniumsalzes,
(iii) Delaminierung des eine geordnete Wechsellagerung aufweisenden 2:1-Schichtsilicats durch Einbringen des unter (ii) separierten eine geordnete Wechsellagerung aufweisenden 2:1-Schichtsilicats in Wasser zur Herstellung einer wässrigen Dispersion enthaltend Schichtsilicatlamellen,
(iv) Separieren der Schichtsilicatlamellen von der unter (iii) hergestellten Dispersion,
**dadurch gekennzeichnet, dass**
die Schichtsilicatlamellen ein durchschnittliches Aspektverhältnis von mindestens 10.000 aufweisen.

2. Schichtsilicatlamellen gemäß Anspruch 1, **dadurch gekennzeichnet, dass** das in (i) verwendete Alkylammoniumsalz in der Alkylkette 2 bis 8 Kohlenstoffatome aufweist.

3. Schichtsilicatlamellen gemäß einem der Ansprüche 1 oder 2, **dadurch gekennzeichnet, dass** die Konzentration des Alkylammoniumsalzes im Lösemittelgemisch aus Wasser und dem Monoalkohol mit 1 bis 4 Kohlenstoffatomen in (i) 0,5 bis 100,0 mmol/L beträgt.

4. Schichtsilicatlamellen gemäß einem der Ansprüche 1 bis 3, **dadurch gekennzeichnet, dass** in (i) ein Lösemittelgemisch aus Wasser und Ethanol verwendet wird.

5. Schichtsilicatlamellen gemäß einem der Ansprüche 1 bis 4, **dadurch gekennzeichnet, dass** das 2:1-Schichtsilicat (A) ein schmelzsynthetisch hergestelltes 2:1-Schichtsilicat ist.

6. Schichtsilicatlamellen gemäß einem der Ansprüche 1 bis 4, **dadurch gekennzeichnet, dass** das 2:1-Schichtsilicat (A) ein natürlich vorkommendes 2:1-Schichtsilicat ist oder hergestellt wird durch Behandlung eines natürlichen vorkommenden 2:1-Schichtsilicats mit einer wässrigen Lösung eines Alkalimetallsalzes, wobei das Alkalimetallkation des Alkalimetallsalzes Na⁺ ist.

7. Schichtsilicatlamellen gemäß einem der Ansprüche 1 bis 6, wobei das durchschnittliche Aspektverhältnis mittels Static Light Scattering (SLS) gemäß DIN 13320 (Stand: 2009) bestimmt wurde.

8. Verfahren zur Herstellung von Schichtsilicatlamellen gemäß einem der Ansprüche 1 bis 7 durch die Delaminierung eines eine geordnete Wechsellagerung aufweisenden 2:1-Schichtsilicats in Wasser umfassend wenigstens die Schritte
(i) Herstellung des eine geordnete Wechsellagerung aufweisenden 2:1-Schichtsilicats durch Behandlung eines 2:1-Schichtsilicats (A), mit einem Lösemittelgemisch aus Wasser und einem Monoalkohol mit 1 bis 4 Kohlenstoffatomen, welches ein Alkylammoniumsalz enthält, wobei das 2:1-Schichtsilicat (A) eine Schichtladung nach Lagaly von 0,56 p.f.u. bis 0,90 p.f.u. aufweist und die Zwischenschichten mindestens alternierend Natriumkationen aufweisen,
(ii) Separieren des eine geordnete Wechsellagerung aufweisenden 2:1-Schichtsilicats von dem Lösemittelgemisch des Alkylammoniumsalzes,
(iii) Delaminierung des eine geordnete Wechsellagerung aufweisenden 2:1-Schichtsilicats durch Einbringen des unter (ii) separierten eine geordnete Wechsellagerung aufweisenden 2:1-Schichtsilicats in Wasser zur Herstellung einer wässrigen Dispersion enthaltend Schichtsilicatlamellen,
(iv) Separieren der Schichtsilicatlamellen von der unter (iii) hergestellten Dispersion.

9. Wässrige Dispersion enthaltend die Schichtsilicatlamellen gemäß einem der Ansprüche 1 bis 7 oder hergestellt nach dem Verfahren gemäß Anspruch 8.

10. Verwendung der Schichtsilicatlamellen gemäß einem der Ansprüche 1 bis 7 oder hergestellt nach dem Verfahren gemäß Anspruch 8 zur Herstellung eines Verbundmaterials.

11. Verbundmaterial enthaltend die Schichtsilicatlamellen gemäß einem der Ansprüche 1 bis 7 oder hergestellt nach dem Verfahren gemäß Anspruch 8.

12. Verbundmaterial gemäß Anspruch 11 zur Verwendung als Diffusionsbarriere oder als Flammschutzmittel.

## Claims

1. Sheet silicate lamellae obtainable by delaminating a 2:1 sheet silicate, having an ordered interstratification, in water, comprising at least the steps of
(i) preparing the 2:1 sheet silicate having an ordered interstratification by treating a 2:1 sheet silicate (A) with a solvent mixture of water and a monoalcohol having 1 to 4 carbon atoms that comprises an alkylammonium salt, wherein the 2:1 sheet silicate (A) has a Lagaly layer charge of 0.56 p.f.u. to 0.90 p.f.u. and the interlayers at least alternately have sodium cations,
(ii) separating the 2:1 sheet silicate having an ordered interstratification from the solvent mixture of the alkylammonium salt,
(iii) delaminating the 2:1 sheet silicate having an ordered interstratification by introducing the 2:1 sheet silicate having an ordered interstratification and separated under (ii) into water to produce an aqueous dispersion comprising sheet silicate lamellae,
(iv) separating the sheet silicate lamellae from the dispersion prepared under (iii),
**characterized in that**
the sheet silicate lamellae have an average aspect ratio of at least 10 000.

2. Sheet silicate lamellae according to Claim 1, **characterized in that** the alkylammonium salt used in (i) has 2 to 8 carbon atoms in the alkyl chain.

3. Sheet silicate lamellae according to either of Claims 1 and 2, **characterized in that** the concentration of the alkylammonium salt in the solvent mixture of water and the monoalcohol having 1 to 4 carbon atoms in (i) is 0.5 to 100.0 mmol/L.

4. Sheet silicate lamellae according to any of Claims 1 to 3, **characterized in that** a solvent mixture of water and ethanol is used in (i).

5. Sheet silicate lamellae according to any of Claims 1 to 4, **characterized in that** the 2:1 sheet silicate (A) is a 2:1 sheet silicate prepared by melt synthesis.

6. Sheet silicate lamellae according to any of Claims 1 to 4, **characterized in that** the 2:1 sheet silicate (A) is a naturally occurring 2:1 sheet silicate or is prepared by treating a naturally occurring 2:1 sheet silicate with an aqueous solution of an alkali metal salt, wherein the alkali metal cation of the alkali metal salt is Na⁺.

7. Sheet silicate lamellae according to any of Claims 1 to 6, wherein the average aspect ratio has been determined using static light scattering (SLS) according to DIN 13320 (status: 2009).

8. Method for producing sheet silicate lamellae according to any of Claims 1 to 7 by delaminating a 2:1 sheet silicate, having an ordered interstratification, in water, comprising at least the steps of
(i) preparing the 2:1 sheet silicate having an ordered interstratification by treating a 2:1 sheet silicate (A) with a solvent mixture of water and a monoalcohol having 1 to 4 carbon atoms that comprises an alkylammonium salt, wherein the 2:1 sheet silicate (A) has a Lagaly layer charge of 0.56 p.f.u. to 0.90 p.f.u. and the interlayers at least alternately have sodium cations,
(ii) separating the 2:1 sheet silicate having an ordered interstratification from the solvent mixture of the alkylammonium salt,
(iii) delaminating the 2:1 sheet silicate having an ordered interstratification by introducing the 2:1 sheet silicate having an ordered interstratification and separated under (ii) into water to produce an aqueous dispersion comprising sheet silicate lamellae,
(iv) separating the sheet silicate lamellae from the dispersion prepared under (iii).

9. Aqueous dispersion comprising the sheet silicate lamellae according to any of Claims 1 to 7 or produced by the method according to Claim 8.

10. Use of the sheet silicate lamellae according to any of Claims 1 to 7 or produced by the method according to Claim 8 for producing a composite material.

11. Composite material comprising the sheet silicate lamellae according to any of Claims 1 to 7 or produced by the method according to Claim 8.

12. Composite material according to Claim 11 for use as a diffusion barrier or as a flame retardant.

## Revendications

1. Lamelles de silicate stratifié pouvant être obtenues par délamination d'un silicate stratifié 2 : 1 présentant une interstratification ordonnée dans l'eau comprenant au moins les étapes
(i) préparation du silicate stratifié 2 : 1 présentant une interstratification ordonnée par traitement d'un silicate stratifié 2 : 1 (A), avec un mélange de solvants composé d'eau et d'un monoalcool comportant 1 à 4 atomes de carbone, qui contient un sel d'alkylammonium, le silicate stratifié 2:1 (A) présentant une charge stratifiée d'après Lagaly de 0,56 p.f.u. à 0,90 p.f.u. et les couches intermédiaires présentant au moins en alternance des cations sodium,
(ii) séparation du silicate stratifié 2 : 1 présentant une interstratification ordonnée du mélange de solvants du sel d'alkylammonium,
(iii) délamination du silicate stratifié 2 : 1 présentant une interstratification ordonnée par introduction du silicate stratifié 2 : 1 présentant une interstratification ordonnée séparé en (ii) dans l'eau pour la préparation d'une dispersion aqueuse contenant des lamelles de silicate stratifié,
(iv) séparation des lamelles de silicate stratifié de la dispersion préparée en (iii),
**caractérisées en ce que** les lamelles de silicate stratifié présentent un rapport d'aspect moyen d'au moins 10 000.

2. Lamelles de silicate stratifié selon la revendication 1, **caractérisées en ce que** le sel d'alkylammonium utilisé en (i) présente 2 à 8 atomes de carbone dans la chaîne alkyle.

3. Lamelles de silicate stratifié selon l'une quelconque des revendications 1 et 2, **caractérisées en ce que** la concentration du sel d'alkylammonium dans le mélange de solvants composé d'eau et du monoalcool comportant 1 à 4 atomes de carbone en (i) est de 0,5 à 100,0 mmole/L.

4. Lamelles de silicate stratifié selon l'une quelconque des revendications 1 à 3, **caractérisées en ce qu'**en (i) un mélange de solvants composé d'eau et d'éthanol est utilisé.

5. Lamelles de silicate stratifié selon l'une quelconque des revendications 1 à 4, **caractérisées en ce que** le silicate stratifié 2 : 1 (A) est un silicate stratifié 2 : 1 synthétisé à l'état fondu.

6. Lamelles de silicate stratifié selon l'une quelconque des revendications 1 à 4, **caractérisées en ce que** le silicate stratifié 2 : 1 (A) est un silicate stratifié 2 : 1 d'origine naturelle ou est préparé par traitement d'un silicate stratifié 2 : 1 d'origine naturelle avec une solution aqueuse d'un sel de métal alcalin, le cation de métal alcalin du sel de métal alcalin étant Na⁺.

7. Lamelles de silicate stratifié selon l'une quelconque des revendications 1 à 6, où le rapport d'aspect moyen a été déterminé au moyen de diffusion de lumière statique (DLS) selon la norme DIN 13320 (état : 2009).

8. Procédé pour la préparation de lamelles de silicate stratifié selon l'une quelconque des revendications 1 à 7 par délamination d'un silicate stratifié 2 : 1 présentant une interstratification ordonnée dans l'eau comprenant au moins les étapes
(i) préparation du silicate stratifié 2 : 1 présentant une interstratification ordonnée par traitement d'un silicate stratifié 2 : 1 (A), avec un mélange de solvants composé d'eau et d'un monoalcool comportant 1 à 4 atomes de carbone, qui contient un sel d'alkylammonium, le silicate stratifié 2 : 1 (A) présentant une charge stratifiée d'après Lagaly de 0,56 p.f.u. à 0,90 p.f.u. et les couches intermédiaires présentant au moins en alternance des cations sodium,
(ii) séparation du silicate stratifié 2 : 1 présentant une interstratification ordonnée du mélange de solvants du sel d'alkylammonium,
(iii) délamination du silicate stratifié 2 : 1 présentant une interstratification ordonnée par introduction du silicate stratifié 2 : 1 présentant une interstratification ordonnée séparé en (ii) dans l'eau pour la préparation d'une dispersion aqueuse contenant des lamelles de silicate stratifié,
(iv) séparation des lamelles de silicate stratifié de la dispersion préparée en (iii).

9. Dispersion aqueuse contenant les lamelles de silicate stratifié selon l'une quelconque des revendications 1 à 7 ou préparées par le procédé selon la revendication 8.

10. Utilisation des lamelles de silicate stratifié selon l'une quelconque des revendications 1 à 7 ou préparées selon la revendication 8 pour la préparation d'un matériau composite.

11. Matériau composite contenant les lamelles de silicate stratifié selon l'une quelconque des revendications 1 à 7 ou préparées selon la revendication 8.

12. Matériau composite selon la revendication 11 pour une utilisation en tant que barrière de diffusion ou en tant qu'agent ignifugeant.
